# EUROPEAN PATENT APPLICATION

(11) **EP 3 395 569 A1**
(43) Date of publication of application: **31.10.2018**
(21) Application number: 16878495.7
(22) Date of filing: 14.12.2016
(51) Int. Cl.: B32B 27/32, B29C 45/14, B32B 5/02, B32B 27/34, B32B 27/36

(54) **COMPOSITE MOLDED PRODUCT AND METHOD FOR PRODUCING SAME**

(30) Priority: 25.12.2015 JP 2015253768
(71) Applicant: Toray Industries, Inc., Tokyo 103-8666 (JP)
(72) Inventor: HIDAKA Shinsuke, Nagoya-shi Aichi 455-8502 (JP); HATTORI Kimihiko, Nagoya-shi Aichi 455-8502 (JP); MATSUOKA Hideo, Nagoya-shi Aichi 455-8502 (JP)
(74) Representative: Hoefer & Partner Patentanwälte mbB
(86) International application number: PCT/JP2016/087151
(87) International publication number: WO 2017/110604

(57) **Abstract**

Provided are: a composite molded article characterized by being obtained by laminating (A) a fiber-reinforced resin molded article comprising a fiber-reinforced resin having a polyamide-based resin as a matrix resin, (B) a molded article comprising a polyolefin-based resin containing an epoxy group and/or a glycidyl group, and (C) a molded article having at least one selected from a polyester-based resin, a polyethylene-based resin and a polyarylene sulfide-based resin as a matrix resin, in this order, and a method for producing the same. By interposing the layer comprising (B) the polyolefin-based resin containing an epoxy group and/or a glycidyl group as a joining layer of the layer of (A) the fiber-reinforced resin having a polyamide-based resin as a matrix resin and the layer comprising (C) at least one resin selected from a polyester-based resin, a polyethylene-based resin and a polyarylene sulfide-based resin, it becomes possible to obtain a composite molded article in which these layers of (A), (B) and (C) are strongly joined and integrated, and to obtain a composite molded article having excellent characteristics which could not be realized by a single layer of (A) layer or (C) layer.

## Description

### Technical Field of the Invention

The present invention relates to a composite molded article in which a fiber-reinforced resin molded article and a molded article comprising a specific resin different from the matrix resin thereof, in particular, having at least one selected from a polyester-based resin, a polyethylene-based resin and a polyarylene sulfide-based resin as a matrix resin, are joined and integrated via a specific joining layer, and a method for producing the same.

### Background Art of the Invention

Although a fiber-reinforced resin is broadly used in various fields because it has high mechanical properties while it is light in weight, there are many cases where, by employing a structure of a fiber-reinforced resin molded article laminated with a layer of a specific resin different from a matrix resin of the fiber-reinforced resin molded article, as compared with a case of a single layer of the fiber-reinforced resin layer or the specific resin layer, it is possible to satisfy various required performances and to improve moldability and surface properties while securing desired mechanical properties.

For example, it is known that a polyester-based resin, a polyethylene-based resin and a polyarylene sulfide-based resin can exhibit excellent unique characteristics, but in most cases, it is difficult to directly join the fiber-reinforced resin layer and these resin layers. Therefore, it is considered to join the fiber-reinforced resin layer and these resin layers via an adequate joining layer. For example, in Patent document 1, although there is a description with a part of the joining layer component in the present invention which will be described later as a component of the joining layer, there is no description with examples using that, and it has not been proven whether good bonding can be actually achieved. Further, there is also no description of examples with a polyester-based resin and a polyethylene-based resin as a joining object.

Further, in Patent document 2, although there is a description with a three-layer laminate and a polyphenylene sulfide resin, there is no description with joining of different materials, and further, the structure of the joining layer is also different from the structure in the present invention described later. Furthermore, in Patent document 3, although it is described to place a fiber-reinforced resin in a mold and inject a resin into the mold and weld it, and to form a resin layer as a joining object beforehand on the surface of the fiber-reinforced resin, as the resin as a joining object, only described are epoxy resin, cyclic polyphenylene sulfide resin and cyclic PEEK (polyether ether ketone), and further, with respect to a matrix resin of the fiber-reinforced resin, there is no description in the examples.

### Prior art documents

### Patent documents

Patent document 1: WO2014/112501
Patent document 2: WO2012/137554
Patent document 3: JP-A-2013-028519

### Summary of the Invention

### Problems to be solved by the Invention

Accordingly, when aiming to obtain a composite molded article having a fiber-reinforced resin molded article in which a specific resin, in particular, a polyamide-based resin is used as a matrix resin and a joining object molded article comprising a specific resin different from the matrix resin of the fiber-reinforced resin molded article, in particular, at least one selected from a polyester-based resin, a polyethylene-based resin and a polyarylene sulfide-based resin as a matrix resin, an object of the present invention is to provide a composite molded article joined and integrated with a high joining strength via a specific joining layer capable of exhibiting an excellent joining ability to both the fiber-reinforced resin molded article and the joining object molded article, and a method for producing the same .

### Means for solving the Problems

To achieve the above-described object, the present invention provides a composite molded article layered the following (A), (B) and (C) in this order:
(A) a fiber-reinforced resin molded article comprising a fiber-reinforced resin having a polyamide-based resin as a matrix resin;
(B) a molded article comprising a polyolefin-based resin containing an epoxy group and/or a glycidyl group; and
(C) a molded article having at least one selected from a polyester-based resin, a polyethylene-based resin and a polyarylene sulfide-based resin as a matrix resin.

In such a composite molded article according to the present invention, since the polyolefin-based resin containing an epoxy group and/or a glycidyl group in the molded article comprising a polyolefin-based resin containing an epoxy group and/or a glycidyl group (B) interposed has a high joining suitability to both the polyamide-based resin in the fiber-reinforced resin molded article comprising a fiber-reinforced resin having a polyamide-based resin as a matrix resin (A) and the resin in the molded article having at least one selected from a polyester-based resin, a polyethylene-based resin and a polyarylene sulfide-based resin as a matrix resin (C), these molded articles layered in the order of (A), (B) and (C) are joined and integrated with a high joining strength over the entire surfaces, not only the initial characteristics but also the strength and stiffness after the evaluation of long-term durability are excellent, and the intended object can be achieved securely.

In the above-described composite molded article according to the present invention, it is preferred that the polyamide-based resin in the fiber-reinforced resin molded article (A) is nylon 6, and the molded article (C) has at least one selected from polybutylene terephthalate, polyethylene and polyphenylene sulfide as a matrix resin. In this case, the adhesion with the molded article comprising a polyolefin-based resin containing an epoxy group and/or a glycidyl group (B) is good, the flexural strength and flexural modulus in a flexural evaluation are greatly improved, and further, no extreme decrease in flexural strength and flexural modulus is observed even in a flexural evaluation after a test for heat aging resistance or hot water resistance.

In the above-described composite molded article according to the present invention, it is preferred that the fiber-reinforced resin molded article (A) contains reinforcing fibers having a number average fiber length of 2 mm or more. By containing such reinforcing fibers, because the fiber-reinforced resin molded article (A) can exhibit a high mechanical strength, it becomes possible to exhibit a high mechanical strength even as a whole of the composite molded article.

In particular, if the reinforcing fibers of the fiber-reinforced resin molded article (A) are continuous fibers, it becomes possible to exhibit a particularly high mechanical strength.

Further, if the reinforcing fibers of the fiber-reinforced resin molded article (A) are continuous fibers and oriented in one direction, a composite molded article can exhibit a high mechanical strength, particularly in a specific direction in which continuous reinforcing fibers are oriented.

Further, in the composite molded article according to the present invention, although the reinforcing fibers of the fiber-reinforced resin molded article (A) are not particularly limited and it is possible to use carbon fibers, glass fibers, aramid fibers, or other reinforcing fibers, in particular, in case where it is aimed to exhibit a high mechanical strength, it is preferred to contain carbon fibers.

Further, in the composite molded article according to the present invention, it is preferred that the polyolefin-based resin containing an epoxy group and/or a glycidyl group (B) comprises an epoxy group-containing ethylene-based copolymer containing a monomer unit derived from ethylene and a monomer unit derived from glycidyl methacrylate. By employing such a composition, the polyolefin-based resin containing an epoxy group and/or a glycidyl group (B) can exhibit a high joining suitability easily and adequately to both the polyamide-based resin in the fiber-reinforced resin molded article (A) and the at least one matrix resin selected from a polyester-based resin, a polyethylene-based resin and a polyarylene sulfide-based resin in the joining object molded article (C), and the long-term durability is also excellent.

In the composite molded article according to the present invention, from the viewpoint that the molded article comprising a polyolefin-based resin containing an epoxy group and/or a glycidyl group, which is interposed, can join the fiber-reinforced resin molded article (A) and the joining object molded article (C) most strongly, it is preferred that the thickness of the molded article comprising a polyolefin-based resin containing an epoxy group and/or a glycidyl group (B) is in a range of 10 to 200 µm. It is more preferably 20 µm or more and 100 µm or less.

In the above-described composite molded article according to the present invention, it is preferred in combination that the molded article comprising a polyolefin-based resin containing an epoxy group and/or a glycidyl group (B) comprises a copolymer prepared by graft polymerizing an acrylonitrile and styrene copolymer to an ethylene glycidyl methacrylate copolymer, and the molded article (C) comprises a polyethylene-based resin. In this case, a flexural strength and a flexural modulus in a flexural evaluation are greatly improved, and further, no extreme decrease in flexural strength and flexural modulus is observed even in a flexural evaluation after a test for heat aging resistance or hot water resistance.

A method for producing a composite molded article according to the present invention, for producing the above-described composite molded article according to the present invention, comprises the steps of: placing a fiber-reinforced resin molded article (A) and a molded article comprising a polyolefin-based resin containing an epoxy group and/or a glycidyl group (B) in a mold; and supplying at least one liquefied resin selected from a polyester-based resin, a polyethylene-based resin and a polyarylene sulfide-based resin (C) around the molded articles in the mold to insert-mold the molded articles.

In this method, as the method for supplying at least one resin selected from a polyester-based resin, a polyethylene-based resin and a polyarylene sulfide-based resin (C), for example, a method can be employed wherein at least one liquefied resin selected from a polyester-based resin, a polyethylene-based resin and a polyarylene sulfide-based resin (C) is supplied into the mold by injection molding or injection compression molding.

In the method for producing a composite molded article according to the present invention, it is preferred that the fiber-reinforced resin molded article (A) is molded by introducing continuous fibers into an impregnation die filled with molten polyamide-based resin and pulling them out of a slit die.

Further, in the method for producing a composite molded article according to the present invention, it is preferred that the fiber-reinforced resin molded article (A) and the molded article comprising a polyolefin-based resin containing an epoxy group and/or a glycidyl group (B) are molded and integrated by any one of (a) a method for laminating a thin film-like molded article comprising a polyolefin-based resin containing an epoxy group and/or a glycidyl group (B) on at least one surface of the fiber-reinforced resin molded article (A) and melting it by heat pressing and (b) a method for applying a molten polyolefin-based resin containing an epoxy group and/or a glycidyl group (B) onto at least one surface of the fiber-reinforced resin molded article (A) and cooling it.
(A) a fiber-reinforced resin molded article comprising a fiber-reinforced resin having a polyamide-based resin as a matrix resin;
(B) a molded article comprising a polyolefin-based resin containing an epoxy group and/or a glycidyl group; and
(C) a molded article having at least one selected from a polyester-based resin, a polyethylene-based resin and a polyarylene sulfide-based resin as a matrix resin.

### Effect according to the Invention

Thus, according to the composite molded article and the method for producing the same according to the present invention, by interposing the layer (B) comprising a polyolefin-based resin containing an epoxy group and/or a glycidyl group as a joining layer between the layer (A) of the fiber-reinforced resin in which a polyamide-based resin is used as a matrix resin and the layer (C) comprising at least one selected from a polyester-based resin, a polyethylene-based resin and a polyarylene sulfide-based resin, a composite molded article can be obtained in which the layers (A), (B) and (C) are strongly joined and integrated, and a composite molded article having excellent characteristics not realizable by the layer (A) or layer (C) alone can be obtained. In particular, by having the fiber-reinforced resin layer (A), it is possible to exhibit high mechanical properties while exerting other required characteristics as a whole of the composite molded article.

### Embodiments for carrying out the Invention

Hereinafter, the present invention will be explained in more detail together with embodiments.

In the composite molded article according to the present invention, (A) a fiber-reinforced resin molded article comprising a fiber-reinforced resin having a polyamide-based resin as a matrix resin; (B) a molded article comprising a polyolefin-based resin containing an epoxy group and/or a glycidyl group; and (C) a molded article having at least one selected from a polyester-based resin, a polyethylene-based resin and a polyarylene sulfide-based resin as a matrix resin, are laminated in this order. These components will be explained in detail below.

### (A) Fiber-reinforced resin molded article:

As the thermoplastic resin used in the fiber-reinforced resin molded article, a polyamide resin is used, and it is a polymer having an amide bond, whose main raw materials are an aminocarboxylic acid, a lactam or a diamine and a dicarboxylic acid (including a pair of salts thereof), in a main chain. As concrete examples of the raw materials, 6-aminocaproic acid, 11-aminoundecanoic acid, 12-aminododecanoic acid and the like are exemplified as the aminocarboxylic acid. Further, as the lactams, ε-caprolactam, co-undecanolactam, co-laurolactam and the like are exemplified. As the diamine, tetramethylene diamine, hexamethylene diamine, undecamethylene diamine, dodecamethylene diamine and the like are exemplified. Furthermore, as the dicarboxylic acids, adipic acid, suberic acid, sebacic acid, dodecanedioic acid and the like are exemplified. These diamines and dicarboxylic acids can also be used as a pair of salts.

As preferable examples of the polyamide-based resin, polycaproamide (nylon 6), polytetramethylene adipamide (nylon 46), polyhexamethylene adipamide (nylon 66), polycaproamide/polyhexamethylene adipamide copolymer (nylon 6/66), polyundecamide (nylon 11), polycaproamide/ polyundecamide copolymer (nylon 6/11), polydodecamide (nylon 12), polycaproamide/polydodecamide copolymer (nylon 6/12), polyhexamethylene sebacamide (nylon 610), polyhexamethylene dodecamide (nylon 612), polyundecamethylene adipamide (nylon 116), and mixtures or copolymers thereof and the like are exemplified. Among them, nylon 6 is particularly preferable. Further, the polyamide-based resin may be used alone or in combination of two or more.

Next, as reinforcing fibers used in the fiber-reinforced resin molded article, inorganic fibers such as carbon fibers and glass fibers, synthetic resin fibers such as polyamide-based fibers, polyester-based fibers and aramid fibers, and metal fibers such as titanium fibers, boron fibers and stainless steel fibers are exemplified, but it is not necessarily limited thereto. The reinforcing fibers are preferably carbon fibers. By using carbon fibers, a composite molded article excellent in mechanical properties can be obtained.

Although not particularly restricted, in one embodiment of the present invention, a skin material comprises a fiber-reinforced thermoplastic resin, it constitutes a surface layer of the structure in the finally molded form and plays a role in the strength of the structure together with a core material, and because it dominates the rigidity of the structure as a part of the surface layer, it is preferred to have a high stiffness (flexural stiffness or the like) with respect to a desired direction. For that purpose, it is preferred that the reinforcing fibers of the skin material comprise continuous fibers.

Further, as the skin material, a skin material in which reinforcing fibers are aligned in one direction and impregnated with a thermoplastic resin can be used. By using such a skin material, even if it is a relatively large-sized and large-area composite molded article, the skin material can be easily arranged at a predetermined position. Further, in this case, as the skin material, it is also possible to employ a form of a plate-like skin material laminated or knitted with a tape-like base material in which reinforcing fibers are aligned in one direction and impregnated with a thermoplastic resin. By employing such a form, even in a relatively large-sized and large-area structure, it is possible to easily arrange the skin material at a predetermined position as well as to easily impart desired mechanical properties to the skin material.

In addition, as a skin material, it is possible to employ a form containing a reinforcing fiber woven fabric. By employing such a form, it is also possible to impart a desirable design property to the surface of the composite molded article. Further, by containing the reinforcing fiber woven fabric, because it becomes also possible to further improve the mechanical properties of the skin material itself constituting the surface layer of the composite molded article, it is possible to improve the mechanical properties as a whole of the structure.

The method for producing the skin material comprising a thermoplastic resin reinforced by continuous fibers aligned in one direction, used in the present invention, is not particularly restricted, and for example, a pultrusion method for putting continuous fibers in an impregnation die filled with a molten resin and pulling the fibers out of a slit die, a powder impregnation method for sprinkling a thermoplastic resin powder onto a continuous fiber bundle and melt-pressing it, a method for arranging fibers mixed spun with continuous reinforcing fibers and thermoplastic fibers in a plate form and hot pressing it, a method for pressing resin films to upper and lower sides of continuous fibers aligned in one direction and impregnating the resin, and the like, can be exemplified. Among these manufacturing methods, the pultrusion method for putting continuous fibers in an impregnation die filled with a molten resin and pulling the fibers out of a slit die is preferred because the impregnation property of the molten resin into the continuous fibers is good, and the strength, the stiffness, further, the properties after tests of heat aging resistance and hot water resistance of a composite molded article become high.

### (B) Ethylene-based copolymer containing an epoxy group and/or a glycidyl group:

The epoxy group- and/or glycidyl group-containing ethylene-based copolymer (B) in the present invention is a copolymer, for example, containing a monomer unit derived from ethylene and a monomer unit derived from glycidyl methacrylate.

From the viewpoint of adhesiveness, this ethylene-based copolymer containing an epoxy group and/or a glycidyl group, when the mass of this copolymer is referred to as 100% by mass, contains a monomer unit derived from glycidyl methacrylate in a range of 0.01 to 30% by mass, preferably 0.1 to 30% by mass. 1% by mass or more is more preferred, and 5% by mass or more is further preferred. 20% by mass or less is more preferred, and 15% by mass or less is further preferred.

As the monomers derived from glycidyl methacrylate, for example, α,β-unsaturated glycidyl esters such as glycidyl methacrylate and glycidyl acrylate, and α, β-unsaturated glycidyl ethers such as allyl glycidyl ether and 2-methylallyl glycidyl ether, can be exemplified, and preferably, glycidyl methacrylate is employed.

As the ethylene-based copolymer containing an epoxy group and/or a glycidyl group (B), concretely, glycidyl methacrylate-ethylene copolymer (for example, trade name "Bond First", supplied by Sumitomo Chemical Co., Ltd.) can be exemplified. Further, as the polyolefin-based copolymer containing an epoxy group and/or a glycidyl group (B), a copolymer obtained by graft polymerizing a monomer derived from glycidyl methacrylate to polyethylene, polypropylene, polystyrene, ethylene-α-olefin copolymer, hydrogenated or non-hydrogenated styrene-conjugated diene, or the like by solution or melt kneading may be used.

The melt flow rate of the component (B) is preferably 0.1 to 300 g/10 min. It is more preferably 0.5 g/10 min or more, and further preferably 1 g/10 min or more. It is more preferably 100 g/10 min or less, and further preferably 10 g/10 min or less. The melt flow rate referred to here is measured under the conditions of a test load of 21.18N and a test temperature of 190°C according to the method specified in JIS K 7210 (1995).

The component (B) can be prepared, for example, by a method of copolymerizing a monomer having an epoxy group with ethylene and, if necessary, with another monomer by a high-pressure radical polymerization method, a solution polymerization method, an emulsion polymerization method or the like, a method of graft polymerizing a monomer having an epoxy group to an ethylene-based resin, or the like.

### (C) Molded article having a matrix resin selected from polyester-based resin, polyethylene-based resin and polyarylene sulfide-based resin:

### (1) Polyester-based resin:

A preferable polyester-based resin in the present invention is a polymer or a copolymer having an ester bond in the main chain and containing at least one selected from (a) a dicarboxylic acid or an ester forming derivative thereof and a diol or an ester forming derivative thereof, (b) a hydroxycarboxylic acid or an ester forming derivative thereof and (c) a lactone as a main structural unit.

As the above-described dicarboxylic acid or ester-forming derivative thereof, aromatic dicarboxylic acids such as terephthalic acid, isophthalic acid, phthalic acid, 2,6-naphthalene dicarboxylic acid, 1,5-naphthalene dicarboxylic acid, bis(p-carboxy phenyl) methane, anthracene dicarboxylic acid, 4,4'-diphenyl ether dicarboxylic acid, 5-tetrabutyl phosphonium isophthalic acid and 5-sodium sulfoisophthalic acid, aliphatic dicarboxylic acids such as oxalic acid, succinic acid, adipic acid, sebacic acid, azelaic acid, dodecanedioic acid, malonic acid, glutaric acid and dimer acid, alicyclic dicarboxylic acids such as 1,3-cyclohexane dicarboxylic acid and 1,4-cyclohexane dicarboxylic acid, and ester-forming derivatives thereof, can be exemplified.

Further, as the above-described diol or ester forming derivative thereof, aliphatic glycols having a carbon number of 2 to 20, namely, ethylene glycol, propylene glycol, 1,4-butane diol, neopentyl glycol, 1,5-pentane diol, 1,6-hexane diol, decamethylene glycol, cyclohexane dimethanol, cyclohexane diol, dimer diol and the like, long-chain glycols having a molecular weight of 200 to 100,000, namely, polyethylene glycol, poly-1,3-propylene glycol, polytetramethylene glycol and the like, or aromatic dioxy compounds, namely, 4,4'-dihydroxy biphenyl, hydroquinone, t-butyl hydroquinone, bisphenol A, bisphenol S, bisphenol F and the like, and ester-forming derivatives thereof, can be exemplified.

As the polymer or copolymer having a structural unit composed of a dicarboxylic acid or an ester-forming derivative thereof and a diol or an ester-forming derivative thereof, aromatic polyester resins such as polyethylene terephthalate, polypropylene terephthalate, polybutylene terephthalate, polycyclohexane dimethylene terephthalate, polyhexylene terephthalate, polyethylene isophthalate, polypropylene isophthalate, polybutylene isophthalate, polycyclohexane dimethylene isophthalate, polyhexylene isophthalate, polyethylene naphthalate, polypropylene naphthalate, polybutylene naphthalate, polyethylene isophthalate /terephthalate, polypropylene isophthalate/terephthalate, polybutylene isophthalate/terephthalate, polyethylene terephthalate/naphthalate, polypropylene terephthalate/naphthalate, polybutylene terephthalate/naphthalate, polybutylene terephthalate/decane dicarboxylate, polyethylene terephthalate/cyclohexane dimethylene terephthalate, polyethylene terephthalate/5-sodium sulfo isophthalate, polypropylene terephthalate/5-sodium sulfo isophthalate, polybutylene terephthalate/5-sodium sulfo isophthalate, polyethylene terephthalate/polyethylene glycol, polypropylene terephthalate/polyethylene glycol, polybutylene terephthalate/polyethylene glycol, polyethylene terephthalate/polytetramethylene glycol, polypropylene terephthalate/polytetramethylene glycol, polybutylene terephthalate/polytetramethylene glycol, polyethylene terephthalate/isophthalate/polytetramethylene glycol, polypropylene terephthalate/isophthalate/polytetramethylene glycol, polybutylene terephthalate /isophthalate/polytetramethylene glycol, polyethylene terephthalate/succinate, polypropylene terephthalate/succinate, polybutylene terephthalate/succinate, polyethylene terephthalate/adipate, polypropylene terephthalate/adipate, polybutylene terephthalate/adipate, polyethylene terephthalate/sebacate, polypropylene terephthalate/sebacate, polybutylene terephthalate/sebacate, polyethylene terephthalate/isophthalate/adipate, polypropylene terephthalate/isophthalate/adipate, polybutylene terephthalate/isophthalate/succinate, polybutylene terephthalate/isophthalate/adipate, and polybutylene terephthalate/isophthalate/sebacate, and aliphatic polyester resins such as polyethylene oxalate, polypropylene oxalate, polybutylene oxalate, polyethylene succinate, polypropylene succinate, polybutylene succinate, polyethylene adipate, polypropylene adipate, polybutylene adipate, polyneopentyl glycol adipate, polyethylene sebacate, polypropylene sebacate, polybutylene sebacate, polyethylene succinate/adipate, polypropylene succinate/adipate and polybutylene succinate/adipate, can be exemplified.

Further, as the above-described hydroxycarboxylic acid, glycolic acid, lactic acid, hydroxy propionic acid, hydroxy butyric acid, hydroxy valeric acid, hydroxy caproic acid, hydroxy benzoic acid, p-hydroxy benzoic acid, 6-hydroxy-2-naphthoic acid, and ester-forming derivatives thereof and the like can be exemplified, and as the polymers or copolymers having these as structural units, aliphatic polyester resins such as polyglycolic acid, polylactic acid, polyglycolic acid/lactic acid, and polyhydroxy butyric acid/β-hydroxy butyric acid/β-hydroxy valeric acid, can be exemplified.

Further, as the above-described lactone, caprolactone, valerolactone, propiolactone, undecalactone, 1,5-oxepan-2-one and the like can be exemplified, and as polymers or copolymers containing these as a structural unit, polycaprolactone, polyvalerolactone, polypropiolactone, polycaprolactone/valerolactone and the like can be exemplified.

Among them, a polymer or copolymer containing a dicarboxylic acid or an ester-forming derivative thereof and a diol or an ester-forming derivative thereof as a main structural unit is preferable, a polymer or copolymer containing an aromatic dicarboxylic acid or an ester-forming derivative thereof and an aliphatic diol or an ester-forming derivative thereof as a main structural unit is more preferable, and a polymer or copolymer containing a terephthalic acid or an ester forming derivative thereof and an aliphatic diol selected from ethylene glycol, propylene glycol and butane diol or an ester-forming derivative thereof as a main structural unit is further preferable, and in particular, non-liquid crystalline polyester resins such as polyethylene terephthalate, polypropylene terephthalate, polybutylene terephthalate, polycyclohexane dimethylene terephthalate, polyethylene naphthalate, polypropylene naphthalate, polybutylene naphthalate, polyethylene isophthalate/terephthalate, polypropylene isophthalate/terephthalate, polybutylene isophthalate/terephthalate, polyethylene terephthalate/naphthalate, polypropylene terephthalate/naphthalate, polybutylene terephthalate/naphthalate, polylactic acid and polyglycolic acid are preferred, and more preferred are polyethylene terephthalate and polybutylene terephthalate, and polybutylene terephthalate is particularly preferred.

In the present invention, it is preferred that the rate of a terephthalic acid or an ester-forming derivative thereof to the total dicarboxylic acid in the above-described polymer or copolymer containing the dicarboxylic acid or the ester-forming derivative thereof and the diol or the ester-forming derivative thereof as the main structural unit is 30 mol% or more, and more preferably 40 mol% or more.

Although the amount of the carboxyl terminal group of the polyester-based resin used in the present invention is not particularly limited, from the viewpoint of hydrolysis resistance and heat resistance, it is preferably 50 eq/t or less, more preferably 30 eq/t or less, further preferably 20 eq/t or less, and particularly preferably 10 eq/t or less. he lower limit is 0 eq/t. In the present invention, the amount of the carboxyl terminal group of the polyester resin is a value measured by titration with ethanolic potassium hydroxide after being dissolved in an o-cresol/chloroform solvent.

The amount of the vinyl terminal group of the polyester-based resin used in the present invention is not particularly limited, but it is preferably 15 eq/t or less, more preferably 10 eq/t or less, further preferably 5 eq/t or less, from the viewpoint of color tone. The lower limit is 0 eq/t. In the present invention, the amount of the vinyl terminal group of the polyester resin is a value measured by 1H-NMR using a deuterated hexafluoroisopropanol solvent.

Although the amount of the hydroxyl terminal group of the polyester-based resin used in the present invention is not particularly limited, from the viewpoint of moldability, it is preferably 50 eq/t or more, more preferably 80 eq/t or more, further preferably 100 eq/t or more, and particularly preferably 120 eq/t or more. The upper limit is not particularly limited, but it is 180 eq/t. In the present invention, the amount of the hydroxyl terminal group of the polyester-based resin is a value measured by 1H-NMR using a deuterated hexafluoroisopropanol solvent.

Although the viscosity of the polyester-based resin used in the present invention is not particularly limited, the intrinsic viscosity measured at 25°C using the o-chlorophenol solution is preferably in a range of 0.36 to 1.60 dl/g, and more preferably in a range of 0.50 to 1.25 dl/g.

From the viewpoint of heat resistance, the molecular weight of the polyester resin used in the present invention is preferably in a range of 50,000 to 500,000 in weight average molecular weight (Mw), more preferably in a range of 100,000 to 300,000, and further preferably in a range of 150,000 to 250,000.

The method for producing the polyester-based resin used in the present invention is not particularly limited, and it can be produced by known polycondensation method, ring-opening polymerization method or the like, and may be either batch polymerization or continuous polymerization, and further, any of ester exchange reaction and reaction by direct polymerization can be applied, but from the viewpoint that the amount of carboxyl terminal group can be decreased and the effect of improving flowability and hydrolysis resistance becomes great, continuous polymerization is preferred, and from the viewpoint of cost, direct polymerization is preferred.

In case where the polyester-based resin used in the present invention is a polymer or copolymer obtained by a condensation reaction using, as main components, a dicarboxylic acid or an ester-forming derivative thereof and a diol or an ester-forming derivative thereof, it can be produced by subjecting a dicarboxylic acid or an ester-forming derivative thereof and a diol or an ester-forming derivative thereof to esterification reaction or transesterification reaction, followed by polycondensation reaction. Where, in order to effectively advance the esterification reaction or the transesterification reaction and the polycondensation reaction, it is preferred to add a polymerization reaction catalyst during these reactions. As concrete examples of the polymerization reaction catalyst, organic titanium compounds such as methyl ester, tetra-n-propyl ester, tetra-n-butyl ester, tetraisopropyl ester, tetraisobutyl ester, tetra-tert-butyl ester, cyclohexyl ester, phenyl ester, benzyl ester or tolyl ester of titanic acid, and mixed esters thereof, tin compounds such as dibutyl tin oxide, methylphenyl tin oxide, tetraethyl tin, dihexaethyl tin oxide, dicyclohexahexyl tin oxide, didodecyl tin oxide, triethyl tin hydroxide, triphenyl tin hydroxide, triisobutyl tin acetate, dibutyl tin diacetate, diphenyl tin dilaurate, monobutyl tin trichloride, dibutyl tin dichloride, tributyl tin chloride, dibutyl tin sulfide and butyl hydroxy tin oxide, and alkyl stannoic acid such as methyl stannoic acid, ethyl stannonic acid or butyl stannonic acid, zirconia compounds such as zirconium tetra-n-butoxide, antimony compounds such as antimony trioxide and antimony acetate, and the like, can be exemplified, and among these, organic titanium compounds and tin compounds are preferable, and further, tetra-n-propyl ester, tetra-n-butyl ester and tetra isopropyl ester of titanic acid are preferable, and tetra-n-butyl ester of titanic acid is particularly preferable. These polymerization reaction catalysts may be used alone, or two or more of them may be used in combination. The addition amount of the polymerization reaction catalyst is preferably in a range of 0.005 to 0.5 part by weight, more preferably 0.01 to 0.2 part by weight, relatively to 100 parts by weight of the polyester resin, from the viewpoints of mechanical properties, moldability and color tone.

### (2) Ethylene-based resin composition:

As the ethylene-based resin composition, a composition having a density measured without annealing by the method defined in JIS K 6760-1981 which exceeds 910 kg/m³, and an ethylene homopolymer, an ethylene-α-olefin copolymer and the like can be exemplified. The α-olefin used in the ethylene-α-olefin copolymer is an α-olefin having a carbon number of 4 to 12, and for example, 1-butene, 2-methyl-1-propene, 2-methyl-1-butene, 3-methyl-1-butene, 1-hexene, 2-ethyl-1-butene, 2,3dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, 1-dodecene, and the like can be exemplified. In particular, 1-butene, 1-pentene, 1-hexene and 1-octene are preferred.

In the present invention, in addition to the above-described components, other additional components may be added as long as the characteristics and effects of the present invention are not damaged. For example, antioxidants, weathering resistance improvers, nucleating agents, flame retardants, plasticizers, lubricants, antistatic agents, various colorants and the like can be exemplified.

From the viewpoint of the strength of the laminate, the melt flow rate (hereinafter, also referred to as MFR) of the ethylene-based resin composition is preferably 0.01 to 400 g/10 min. It is more preferably 1 g/10 min or more, and further preferably 5 g/10 min or more. It is more preferably 200 g/10 min or less, and further preferably 150 g/10 min or less. The MFR in the present invention is a value measured at 190°C under a load of 21.2N according to ASTM D1238.

### (3) Polyarylene sulfide-based resin:

As typical examples of the polyarylene sulfide-based resin, polyphenylene sulfide (hereinafter, also abbreviated as PPS), polyphenylene sulfide sulfone, polyphenylene sulfide ketone, random copolymers thereof, block copolymers thereof, and mixtures thereof can be exemplified, and among them, polyphenylene sulfide is particularly preferably used. Such a polyphenylene sulfide has a repeating unit represented by the following structural formula, it is preferably a polymer containing the unit at 70 mol% or more, more preferably 90 mol% or more, and in case where the repeating unit is 70 mol% or more it is preferable because of being excellent in heat resistance.

Further, in such a polyphenylene sulfide-based resin, it is possible to constitute not more than 30 mol% of the repeating unit thereof with a repeating unit having the following structural formula or the like, and it may be a random copolymer or a block copolymer and may be a mixture thereof.

Such a polyarylene sulfide-based resin can be produced by a generally known method, that is, a method of obtaining a polymer having a relatively small molecular weight described in JP-B-45-3368 or a method of obtaining a polymer having a relatively large molecular weight described in JP-B-52-12240 and JP-A-61-7332, or the like.

The molecular weight of the polyarylene sulfide-based resin used in the present invention is preferably 50,000 or less in terms of polystyrene, more preferably 40,000 or less, particularly preferably 25,000 or less, in order to enable high filler filling. Although the lower limit of the weight average molecular weight is not particularly limited, it is preferably 1,500 or more in consideration of retention stability and the like. Further, two or more kinds of polyarylene sulfide-based resins having different weight average molecular weights may be used in combination. Where, the polystyrene equivalent weight average molecular weight of the polyarylene sulfide-based resin can be measured by dissolving 5 mg of the polyarylene sulfide-based resin in 5 g of 1-chloronaphthalene (1-CN) and using an ultra-high temperature GPC apparatus.

In the molded article containing a matrix resin selected from a polyester-based resin, a polyethylene-based resin and a polyarylene sulfide-based resin (C), it is possible to further add a filler in order to impart mechanical strength and other properties. The filler is not particularly limited, and any filler such as fibrous or non-fibrous (plate-shaped, scale-shaped, grain-shaped or irregular-shaped filler, crushed filler, etc.) can be used.

Concretely, for example, as the fibrous filler, exemplified are glass fiber, carbon fiber of PAN type or pitch type, metal fiber such as stainless steel fiber, aluminum fiber or brass fiber, organic fiber such as aromatic polyamide fiber, gypsum fiber, ceramic fiber, asbestos fiber, zirconia fiber, alumina fiber, silica fiber, titanium oxide fiber, silicon carbide fiber, rock wool, potassium titanate whisker, barium titanate whisker, aluminum borate whisker, silicon nitride whisker and the like. The kind of glass fiber or carbon fiber is not particularly limited as long as it is generally used for resin reinforcement, and it can be used by selecting from, for example, chopped strand of long fiber type and short fiber type, milled fiber and the like. Further, the glass fibers may be coated with a thermoplastic resin such as an ethylene/vinyl acetate copolymer, or a thermosetting resin such as an epoxy resin, or may be bundled.

As the non-fibrous filler, exemplified are mica, talc, kaolin, silica, calcium carbonate, glass beads, glass flake, glass microballoon, clay, molybdenum disulfide, wollastonite, calcium polyphosphate, graphite, metal powder, metal flake, metal ribbon, metal oxide (alumina, zinc oxide, titanium oxide, etc.), carbon powder, graphite, carbon flake, scaly carbon, carbon nanotube and the like. Further, as concrete examples of the metal kinds of the metal powder, the metal flake and the metal ribbon, silver, nickel, copper, zinc, aluminum, stainless steel, iron, brass, chromium, tin and the like can be exemplified.

Among the above, carbon fiber and glass fiber are preferably used.

In the present invention, it is possible to produce a composite molded article by first producing in the form of a fiber-reinforced resin molded article (A) + a molded article (B), and laminating a molded article (C) on it. In this case, the following methods are exemplified as a method for producing a fiber-reinforced resin molded article (A) + a molded article (B).
(i) (B) is laminated to (A) and it is molten and integrated by heat press.
(ii) In the production process of (A), molten (B) is applied to the surface of (A) and cooled.
(iii) (A) and (B) are co-extruded and discharged and cooled in a state of being integrated.

Among them, the methods of (i) and (ii) are preferred from the viewpoint in that the adhesion is good, the flexural strength and the flexural modulus in the flexural evaluation are greatly improved, and further, an extreme decrease of the flexural strength and the flexural modulus is not observed even in the flexural evaluation after tests of heat aging resistance and hot water resistance.

Further, as a method for producing {(A) + (B)} + (C) resin, the following methods are exemplified.
(i) (C) is heat fused with an integrated sheet of (A) + (B) or independent (A), (B) at the time of injection molding of (C).
(ii) Initially, (C) is injection-molded, and then, an integrated sheet of (A) + (B) is heat fused and integrated by post-lamination.

In this case, there are various welding methods such as laser, hot plate, infrared ray, friction stirring, ultrasonic wave, vibration, spin, microwave, electromagnetic induction, but it is not limited thereto.

Since the composite molded article according to the present invention is excellent in joining strength, it is useful in use for parts forming moving bodies such as automobiles, aircraft, railroad cars, ships, bicycles, and structural members used for electric and electronic equipment, building materials, sports goods and the like. For example, it can be suitably used in automobile parts such as a hood, a door panel, a roof, a seat, a back door, a door inner, and a radiator core support, in parts of electric and electronic equipment such as a housing, a chassis, and a gear, and the like.

### Examples

Hereinafter, Examples and Comparative Examples will be explained. First, methods of determining properties used in the examples and comparative examples will be explained.

### (1) Flexural evaluation

A strip-shaped test piece of 10 mm x 150 mm x 3.0 mm was cut out, and the strip-shaped test piece was pressed and bent under a span distance of 80 mm at a bending speed of 2 mm/min. Measurement was carried out with n=3, and flexural strength and flexural modulus were determined.

### (2) Heat aging resistance test:

The strip-shaped test piece for the flexural evaluation was placed in a hot air oven (supplied by Tabai Corporation) under an atmosphere of 80°C, after 500 hours, it was taken out and left in an atmosphere of 23°C and 50 %RH for 24 hours, and then, flexural strength and flexural modulus were determined.

### (3) Hot water resistance evaluation:

The strip-shaped test piece for the flexural evaluation was immersed in hot water at 50°C, taken out after 500 hours, and after moisture was removed, it was left in an atmosphere of 23°C and 50 %RH for 24 hours, and then, flexural strength and flexural modulus were determined.

### <Production Method of Each Composition>

### Production Example 1: Production of (A) a fiber-reinforced resin molded article (A-1):

Carbon fibers "Torayca" (registered trademark) T700S (12K) supplied by Toray Industries, Inc. were aligned and placed in an impregnation die filled with nylon 6 resin, and then, a fiber-reinforced resin molded article (A-1) having a content of continuous fibers of 50% by weight and having a width of 50 mm and a thickness of 0.28 mm was obtained by drawing molding.

### Production Example 2: Production of (A) a fiber-reinforced resin molded article (A-2):

A fiber-reinforced resin molded article (A-2) with the same fiber content was prepared by a film method in which a nylon 6 resin film was melt-pressed on a continuous fiber bundle of carbon fibers "Torayca" (registered trademark) T700S (12K) supplied by Toray Industries, Inc.

### Production Example 3: Production of a molded article comprising an ethylene-based copolymer containing an epoxy group and/or a glycidyl group (B-1):

"Bond First (registered trademark) E" supplied by Sumitomo Chemical Co., Ltd. (ethylene-glycidyl methacrylate copolymer, MFR (190°C) = 3 g/10 min, content of monomer unit derived from glycidyl methacrylate = 12 mass%) was introduced into an extruder at a temperature of 200°C and the extruded copolymer was cooled and solidified on a cooling drum to form a film having a thickness of 50 µm to prepare a molded article (B-1).

### Production Example 4: Production of a molded article comprising an ethylene-based copolymer containing an epoxy group and/or a glycidyl group (B-2):

A molded article (B-2) was prepared in the same manner as in Production Example 2 other than a condition where a copolymer comprising 98% by weight of ethylene and 2% by weight of glycidyl methacrylate was produced by the method described in JP-A-47-23490 and JP-A-48-11888.

### Production Example 5: Production of a molded article comprising an ethylene-based copolymer containing an epoxy group and/or a glycidyl group (B-3):

"Modiper (registered trademark) A4300" supplied by NOF Corporation ((ethylene- glycidyl methacrylate copolymer) grafted BA (butyl acrylate)/MMA (methyl methacrylate), MFR (190°C) = 0.1 g/10 min) was introduced into an extruder at a temperature of 200°C and the extruded copolymer was cooled and solidified on a cooling drum to form a film having a thickness of 50 µm to prepare a molded article (B-3).

### Production Example 6: Production of a molded article comprising an ethylene-based copolymer containing an epoxy group and/or a glycidyl group (B-4):

"Modiper (registered trademark) A4400" supplied by NOF Corporation ((ethylene- glycidyl methacrylate copolymer) grafted AS (acrylonitrile-styrene), MFR (190°C) = 0.3 g/10 min) was introduced into an extruder at a temperature of 200°C and the extruded copolymer was cooled and solidified on a cooling drum to form a film having a thickness of 50 µm to prepare a molded article (B-4).

### Production Example 7: Production of a molded article comprising an ethylene-based copolymer not containing an epoxy group (B'-1):

A molded article (B'-1) was prepared in the same manner as in Production Example 3 other than a condition where the raw material used was changed to an ethylene-based copolymer not containing an epoxy group ("HIZEX" (registered trademark) 2100J, supplied by Prime Polymer Co., Ltd.).

As the thermoplastic resin composition (C), the following three types were used.
C-1: polyphenylene sulfide resin, "TORELINA" (registered trademark) A604, supplied by Toray Industries, Inc.
C-2: polybutylene terephthalate resin, "TORAYCON" (registered trademark) 1101G30 (reinforced by glass fiber 30%), supplied by Toray Industries, Inc.
C-3: polyethylene resin, "HI-ZEX" (registered trademark) 2100J, supplied by Prime Polymer Co., Ltd.

### <Example 1>: Method for producing a composite molded article

(B) ethylene-based copolymer containing an epoxy group and/or a glycidyl group (B-1) was superimposed on (A) the fiber-reinforced resin molded article (A-1), and press was carried out at 240°C in a press molding machine to obtain a sheet material in which (A) and (B) were integrated. Further, a sheet material in which (A) and (B) were integrated was set in the movable and fixed side cavities of the mold, respectively, in such a manner that (A) was in contact with the mold surface, and the polyphenylene sulfide resin (C-1) was injection molded at a cylinder temperature of 300°C and a mold temperature of 120°C to obtain a composite molded article having a size of 100 × 150 × 3 mm.

### <Examples 2 to 3, 7 to 17, Comparative Examples 4 to 6>

A composite molded article was obtained in the same manner as in Example 1 other than a condition where the molded article and molding conditions used in Example 1 were changed as shown in Table 1 and Table 2.

### <Example 4>

A composite molded article was obtained by injection molding in the same manner as in Example 1 other than a condition where, in the different-material composite molded article described in Example 1, in a state where (A-1) and (B-1) were not integrated, each sheet material was set in the movable and fixed side cavities of the mold, respectively, in such a manner that (A-1) was in contact with the mold surface.

### <Examples 5 to 6>

A composite molded article was obtained in the same manner as in Example 4 other than a condition where the molded article and molding conditions used in Example 4 were changed as shown in Table 1.

### <Comparative Example 1>

(A) the fiber-reinforced resin molded article (A-1) was set in the movable and fixed side cavities of the mold, respectively, in such a manner that (A) comes in contact with the mold surface, and the polyphenylene sulfide resin (C-1) was injection molded at a cylinder temperature of 300°C and a mold temperature of 120°C to obtain a composite molded article having a size of 100 × 150 × 3 mm.

### <Comparative Examples 2 and 3>

A composite molded article was obtained in the same manner as in Comparative Example 1 other than a condition where the molded article and molding conditions used in Comparative Example 1 were changed as shown in Table 2.

### <Comparative Examples 7 to 9>

Molded articles of (C) thermoplastic resin composition alone (C-1 to C-3) were obtained under the molding conditions shown in Table 2.

The property evaluation results of each composite molded article obtained with the composition shown in Table 1 are shown in Table 3 and the property evaluation results of each composite molded article obtained with the composition shown in Table 2 are shown in Table 4. In all of Examples 1 to 17, in cases where (B-1 to 4) were interposed as joining layers, the adhesion was good in any case, and the flexural strength and flexural modulus were greatly improved, and further, it was found that no extreme decrease in flexural strength and flexural modulus was observed even in the flexural evaluation after the tests for heat aging resistance and hot water resistance, and there was no problem.

On the other hand, in Comparative Examples 1 to 3 in which no joining layer was used, the adhesion was very poor, peeling occurred immediately after molding, and it became impossible to evaluate the flexural strength and the flexural modulus in the flexural evaluation. Also in Comparative Examples 4 to 6 in which (B'-1) was used as the joining layer, the adhesion was not sufficiently improved, the effect of improving the flexural strength and the flexural modulus at the initial flexural evaluation was poor, and it was found that also in the flexural evaluation after the tests for heat aging resistance and hot water resistance, peeling occurred during the tests and the flexural strength and the flexural modulus were remarkably decreased. In the single articles of (C-1 to C-3) of Comparative Examples 7 to 9, it was found that the flexural strength and the flexural modulus at the initial stage were low, and property change after the test for heat aging resistance was not observed, but the property after the test for hot water resistance was decreased.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Composition of laminate | (A) fiber-reinforced resin molded article | - | A-1 | A-1 | A-1 | A-1 | A-1 | A-1 | A-1 | A-1 | A-1 |
| | (B) molded article of polyolefin-based resin containing epoxy group | - | B-1 | B-1 | B-1 | B-1 | B-1 | B-1 | B-2 | B-2 | B-2 |
| | (B') polyolefin-based molded article not containing epoxy group | - | - | - | - | - | - | - | - | - | - |
| | (C) thermoplastic resin composition | - | C-1 | C-2 | C-3 | C-1 | C-2 | C-3 | C-1 | C-2 | C-3 |
| Joining conditions | Joining method of (A) and (B) | - | press | press | press | injection | injection | injection | press | press | press |
| | Joining method of (A) + (B) and (C) | - | injection | injection | injection | injection | injection | injection | injection | injection | injection |
| | Injection cylinder setting temperature | °C | 320 | 260 | 220 | 320 | 260 | 220 | 320 | 260 | 220 |
| | Mold setting temperature | °C | 120 | 80 | 80 | 120 | 80 | 80 | 120 | 80 | 80 |
| | | | Example 10 | Example 11 | Example 12 | Example 13 | Example 14 | Example 15 | Example 16 | Example 17 | |
| Composition of laminate | (A) fiber-reinforced resin molded article | - | A-1 | A-1 | A-1 | A-1 | A-2 | A-2 | A-2 | A-2 | |
| | (B) molded article of polyolefin-based resin containing epoxy group | - | B-3 | B-3 | B-4 | B-4 | B-1 | B-1 | B-2 | B-2 | |
| | (B') polyolefin-based molded article not containing epoxy group | - | - | - | - | - | - | - | - | - | |
| | (C) thermoplastic resin composition | - | C-1 | C-3 | C-1 | C-3 | C-1 | C-3 | C-1 | C-3 | |
| Joining conditions | Joining method of (A) and (B) | - | press | press | press | press | press | press | press | press | |
| | Joining method of (A) + (B) and (C) | - | injection | injection | injection | injection | injection | injection | injection | injection | |
| | Injection cylinder setting temperature | °C | 320 | 220 | 320 | 220 | 320 | 220 | 320 | 220 | |
| | Mold setting temperature | °C | 120 | 80 | 120 | 80 | 120 | 80 | 120 | 80 | |

**[Table 2]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Material | (A) fiber-reinforced resin molded article | - | A-1 | A-1 | A-1 | A-1 | A-1 | A-1 | - | - | - |
| | (B) molded article of polyolefin-based resin containing epoxy group | - | - | - | - | - | - | - | - | - | - |
| | (B') polyolefin-based molded article not containing epoxy group | - | - | - | - | B'-1 | B'-1 | B'-1 | - | - | - |
| | (C) thermoplastic resin composition | - | C-1 | C-2 | C-3 | C-1 | C-2 | C-1 | C-1 | C-2 | C-3 |
| Joining conditions | Joining method of (A) and (B) | - | - | - | - | press | press | press | - | - | - |
| | Joining method of (A) + (B) and (C) | - | injection | injection | injection | injection | injection | injection | - | - | - |
| | Injection cylinder setting temperature | °C | 320 | 260 | 220 | 320 | 260 | 220 | 320 | 260 | 220 |
| | Mold setting temperature | °C | 120 | 80 | 80 | 120 | 80 | 80 | 120 | 80 | 80 |

**[Table 3]**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Initial | | Flexural strength | MPa | 370 | 350 | 290 | 300 | 300 | 240 | 360 | 340 | 280 |
| | | Flexural modulus | GPa | 45 | 40 | 34 | 42 | 38 | 32 | 44 | 39 | 33 |
| Long term | Heat aging resistance 80°C×500h | Flexural strength | MPa | 330 | 300 | 250 | 240 | 250 | 180 | 300 | 270 | 220 |
| | | Flexural modulus | GPa | 42 | 38 | 32 | 40 | 35 | 29 | 40 | 35 | 30 |
| | Hot water resistance 40°C×500h | Flexural strength | MPa | 350 | 290 | 260 | 260 | 220 | 180 | 300 | 270 | 220 |
| | | Flexural modulus | GPa | 42 | 36 | 32 | 38 | 32 | 29 | 40 | 35 | 30 |

| | | | | Example 10 | Example 11 | Example 12 | Example 13 | Example 14 | Example 15 | Example 16 | Example 17 | |
|---|---|---|---|---|---|---|---|---|---|---|---|---|
| Initial | | Flexural strength | MPa | 335 | 267 | 330 | 291 | 296 | 232 | 288 | 224 | |
| | | Flexural modulus | GPa | 36 | 24 | 42 | 36 | 36 | 27 | 35 | 25 | |
| Long term | Heat aging resistance 80°C×500h | Flexural strength | MPa | 300 | 223 | 300 | 242 | 242 | 175 | 210 | 154 | |
| | | Flexural modulus | GPa | 33 | 21 | 40 | 33 | 26 | 22 | 25 | 20 | |
| | Hot water resistance 40°C×500h | Flexural strength | MPa | 300 | 220 | 300 | 240 | 240 | 182 | 212 | 148 | |
| | | Flexural modulus | GPa | 33 | 21 | 40 | 33 | 25 | 22 | 25 | 20 | |

**[Table 4]**

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| Initial | | Flexural strength | MPa | impossible to determine | impossible to determine | impossible to determine | 200 | 150 | 100 | 260 | 220 | 23 |
| | | Flexural modulus | GPa | | | | 20 | 20 | 20 | 15 | 10 | 1 |
| Long term | Heat aging resistance 80°C×500h | Flexural strength | MPa | impossible to determine | impossible to determine | impossible to determine | impossible to determine | impossible to determine | 30 | 260 | 230 | 22 |
| | | Flexural modulus | GPa | | | | | | 5 | 15 | 10 | 1 |
| | Hot water resistance 50°C×500h | Flexural strength | MPa | impossible to determine | impossible to determine | impossible to determine | impossible to determine | impossible to determine | 30 | 220 | 198 | 21 |
| | | Flexural modulus | GPa | | | | | | 5 | 14 | 9 | 1 |

### Industrial Applicability

The present invention can be applied to any composite molded article in which a fiber-reinforced resin molded article and a molded article having at least one selected from a polyester-based resin, a polyethylene-based resin and a polyarylene sulfide-based resin as a matrix resin are joined and integrated via a joining layer.

## Claims

1. A composite molded article laminated with the following (A), (B) and (C) in this order:
(A) a fiber-reinforced resin molded article comprising a fiber-reinforced resin having a polyamide-based resin as a matrix resin;
(B) a molded article comprising a polyolefin-based resin containing an epoxy group and/or a glycidyl group; and
(C) a molded article having at least one selected from a polyester-based resin, a polyethylene-based resin and a polyarylene sulfide-based resin as a matrix resin.

2. The composite molded article according to claim 1, wherein the polyamide-based resin in the fiber-reinforced resin molded article (A) is nylon 6, and the molded article (C) has at least one selected from polybutylene terephthalate, polyethylene and polyphenylene sulfide as a matrix resin.

3. The composite molded article according to claim 1 or 2, wherein the fiber-reinforced resin molded article (A) contains reinforcing fibers having a number average fiber length of 2 mm or more.

4. The composite molded article according to any one of claims 1 to 3, wherein the reinforced fibers of the fiber-reinforced resin molded article (A) are continuous fibers.

5. The composite molded article according to any one of claims 1 to 4, wherein reinforcing fibers of the fiber-reinforced resin molded article (A) are continuous fibers and oriented in one direction.

6. The composite molded article according to any one of claims 1 to 5, wherein reinforcing fibers of the fiber-reinforced resin molded article (A) include carbon fibers.

7. The composite molded article according to any one of claims 1 to 6, wherein the polyolefin-based resin containing an epoxy group and/or a glycidyl group (B) comprises an epoxy group- and/or glycidyl group-containing ethylene-based copolymer containing a monomer unit derived from ethylene and a monomer unit derived from glycidyl methacrylate.

8. The composite molded article according to claim 7, wherein the monomer unit derived from glycidyl methacrylate in the polyolefin-based resin containing an epoxy group and/or a glycidyl group (B) is in a range of 0.01 to 30 mass% .

9. The composite molded article according to any one of claims 1 to 8, wherein the molded article comprising a polyolefin-based resin containing an epoxy group and/or a glycidyl group (B) has a thickness in a range of 10 to 200 µm.

10. The composite molded article according to any one of claims 1 to 9, wherein the molded article comprising a polyolefin-based resin containing an epoxy group and/or a glycidyl group (B) comprises a copolymer prepared by graft polymerizing an acrylonitrile and styrene copolymer to an ethylene glycidyl methacrylate copolymer, and the molded article (C) comprises a polyethylene-based resin.

11. A method for producing a composite molded article according to any one of claims 1 to 10, comprising the steps of:
placing a fiber-reinforced resin molded article (A) and a molded article comprising a polyolefin-based resin containing an epoxy group and/or a glycidyl group (B) in a mold; and
supplying at least one liquefied resin selected from a polyester-based resin, a polyethylene-based resin and a polyarylene sulfide-based resin (C) around said molded articles in said mold to insert-mold said molded articles.

12. The method for producing a composite molded article according to claim 11, wherein at least one liquefied resin selected from a polyester-based resin, a polyethylene-based resin and a polyarylene sulfide-based resin (C) is supplied into the mold by injection molding or injection compression molding.

13. The method for producing a composite molded article according to claim 11 or 12, wherein the fiber-reinforced resin molded article (A) is molded by introducing continuous fibers into an impregnation die filled with molten polyamide-based resin and pulling them out of a slit die.

14. The method for producing a composite molded article according to any one of claims 11 to 13, wherein the fiber-reinforced resin molded article (A) and the molded article comprising a polyolefin-based resin containing an epoxy group and/or a glycidyl group (B) are molded and integrated by any one of (a) a method for laminating a thin film-like molded article comprising a polyolefin-based resin containing an epoxy group and/or a glycidyl group (B) on at least one surface of the fiber-reinforced resin molded article (A) and melting it by heat pressing and (b) a method for applying a molten polyolefin-based resin containing an epoxy group and/or a glycidyl group (B) onto at least one surface of the fiber-reinforced resin molded article (A) and cooling it.
